(19) Europäisches Patentamt
European Patent Office
Office européen des brevets

(11) **EP 2 652 018 B1**

(12) **FASCICULE DE BREVET EUROPEEN**

(45) Date de publication et mention
de la délivrance du brevet:
**01.11.2017 Bulletin 2017/44**

(51) Int Cl.:
**B05D 3/06** *(2006.01)*   **B60S 1/38** *(2006.01)*
**C08J 7/12** *(2006.01)*

(21) Numéro de dépôt: **11794770.5**

(22) Date de dépôt: **14.12.2011**

(86) Numéro de dépôt international:
**PCT/EP2011/072761**

(87) Numéro de publication internationale:
**WO 2012/080337 (21.06.2012 Gazette 2012/25)**

(54) **ORGANE D'ESSUYAGE EN MATÉRIAU À BASE D'ÉLASTOMÈRE(S) SUR-RÉTICULÉ**

WISCHELEMENT AUS EINEM MATERIAL AUF DER BASIS VON ÜBERVERNETZTEN ELASTOMER(EN)

WIPING MEMBER MADE FROM A MATERIAL BASED ON OVER-CROSSLINKED ELASTOMER(S)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2010 FR 1004903**

(43) Date de publication de la demande:
**23.10.2013 Bulletin 2013/43**

(73) Titulaire: **Valeo Systèmes d'Essuyage**
**78322 Le Mesnil Saint Denis (FR)**

(72) Inventeurs:
• **BRAUN, Alexis**
**F-63114 Coudes (FR)**
• **BRETAGNOL, Frédéric**
**F-63500 Issoire (FR)**
• **DOUPEUX, Severin**
**F-63500 Issoire (FR)**

(74) Mandataire: **Callu Danseux, Violaine**
**Valeo Systèmes d'Essuyage**
**Service Propriété Industrielle**
**ZA L'Agiot**
**8 Rue Louis Lormand**
**CS 90581 La Verrière**
**78322 Le Mesnil Saint Denis (FR)**

(56) Documents cités:
EP-A2- 0 264 227     DE-A1-102007 046 914
FR-A1- 2 942 801     JP-A- 2009 067 233
US-A1- 2002 164 422     US-B1- 6 287 642

• HANLEY L ET AL: "The growth and modification of materials via ion-surface processing", SURFACE SCIENCE, NORTH-HOLLAND, AMSTERDAM, NL, vol. 500, no. 1-3, 10 March 2002 (2002-03-10), pages 500-522, XP004693312, ISSN: 0039-6028, DOI: 10.1016/S0039-6028(01)01528-X

**EP 2 652 018 B1**

**Description**

La présente invention concerne un organe d'essuyage d'une surface à essuyer, en particulier une lame de balai d'essuie-glace pour véhicule automobile, l'organe comportant un matériau à base d'élastomère(s) présentant un traitement de surface spécifique. L'invention concerne également un procédé d'obtention de cet organe et l'utilisation de celui-ci.

Dans le domaine des matériaux techniques à base d'élastomères, la recherche s'oriente souvent vers une amélioration des propriétés mécaniques et/ou de l'aspect de surface des pièces mises en forme à partir de ces matériaux.

Dans le cas de lames d'essuyage pour balai d'essuie-glace de véhicule automobile, ces lames doivent présenter certaines caractéristiques, en particulier en surface, permettant un essuyage efficace du pare-brise sur lequel elles se déplacent. Ces lames doivent également présenter un confort sonore en utilisation pour l'occupant du véhicule automobile, c'est-à-dire éviter de générer des ondes sonores, donc du bruit.

Afin de remédier à ce problème, il a été proposé de traiter la surface des lames d'essuie-glace.

Un premier type de traitement est une halogénation de la lame qui permet d'augmenter la durée de vie de la lame. Cependant, ce type de traitement présente l'inconvénient d'être peu respectueux de l'environnement (ex : consommation d'eau, de soude, ...). En outre, les atomes d'halogènes qui sont fixés de manière covalente à l'élastomère, notamment par addition nucléophile sur les insaturations des chaînes carbonées confère à la surface du matériau une nature plus hydrophile qui tend à capturer l'eau, ce qui peut provoquer un léger brouillard lors de leur fonctionnement et donc diminuer la visibilité du conducteur du véhicule. Enfin, l'halogénation n'est pas toujours réalisable sur les élastomères ne présentant pas ou peu d'insaturations sur leurs chaînes carbonées comme les silicones ou les caoutchouc EPDM.

Un second type de traitement concerne le dépôt d'un revêtement à base de graphite ou de particules de polymères du type polytétrafluoroéthylène PTFE (par exemple vendues sous la marque Teflon®), polyethylène ou polypropylène afin de diminuer la friction de la lame sur la surface à essuyer. Cependant, ce revêtement peut présenter avec le temps des problèmes d'adhérence sur le matériau, en particulier lorsque ce dernier est à base d'élastomère(s). En effet, les contraintes subies par la lame lors de son fonctionnement créent une détérioration du revêtement et plus particulièrement de son adhérence sur le matériau, réduisant ainsi fortement l'efficacité d'essuyage et la durée de vie de la lame.

La présente invention concerne donc un organe d'essuyage comportant un matériau à base d'élastomère(s) traité de manière à remédier à ces problèmes.

Elle concerne donc un organe d'essuyage comportant un matériau à base d'élastomère(s) comprenant sur au moins une partie d'une surface externe du matériau un revêtement, au moins une partie de la surface de l'ensemble constitué par le matériau à base d'élastomère(s) et le revêtement présentant une réticulation accrue sur au moins une épaisseur superficielle de l'ensemble.

Les définitions et préférence détaillées ci-après sont applicables à toute la demande.

Par « à base de», on entend un matériau comportant au moins 10% d'élastomère(s), de préférence, au moins 20%, plus préférentiellement, au moins 35%.

Par « élastomère(s) », on entend un polymère présentant des propriétés « hyper-élastiques », obtenues après réticulation du polymère. Ces élastomères comprennent des élastomères naturels ou synthétiques, seuls ou en mélange, en particulier les élastomères choisis parmi le groupe constitué par les caoutchoucs naturels (NR), les polychloroprènes (CR), les éthylène-propylène-diène monomères (EPDM), les caoutchoucs nitriles (NBR, HNBR, XNBR), les polybutadiènes (BR), les caoutchoucs butyles, les épichlorhydrines (ECO/GECO), les copolymères d'éthylène-acrylate (type VAMAC), les polyuréthanes (PU), les élastomères fluorés et les élastomères silicone (VMQ/FMQ). Ces élastomères peuvent être utilisés seul ou en mélange. A titre d'exemple, on cite les mélanges NR/EPDM, NR/CR, EPDM/PP ou d'autres mélanges connus par l'homme de métier.

De préférence, les élastomères sont choisis parmi le groupe constitué par les NR, les EPDM, les CR et les mélanges à base de ces élastomères.

En effet, le matériau comprend au moins un élastomère de base, synthétique ou naturel, ainsi que différentes charges et/ou additifs pour assurer ses performances mécaniques et sa compatibilité avec des environnements climatiques variés.

Les charges utilisées sont généralement du noir de carbone, du graphite, de la silice, du talc ou une craie ainsi que leurs dérivés et/ou mélanges.

Les additifs comprennent entre autres des agents de protection, par exemple des dérivés des paraphénylènediamines qui piègent les UV. Les additifs comprennent également des cires qui migrent en surface pour protéger le matériau. De plus, les additifs peuvent comprendre des plastifiants pour améliorer la tenue à froid et la mise en oeuvre de l'élastomère. Les plastifiants les plus couramment utilisés sont l'huile naphténique, l'huile aromatique, l'huile parrafinique ou l'huile ester. Les additifs comprennent un système de vulcanisation, par exemple comprenant du soufre et/ou différentes molécules améliorant l'efficacité de la réaction ou des dérivés de peroxydes.

Ainsi, on dépose, sur le matériau à base d'élastomère, un revêtement qui comprend au moins un liant et/ou au moins une charge. Ce revêtement permet de réduire la friction entre l'organe d'essuyage et la surface à essuyer, et donc de maintenir la qualité d'essuyage du balai plus longtemps. A titre d'exemple, le revêtement utilisé peut être celui défini dans l'exemple du brevet US 5883168.

Le ou les liants comprennent un polymère dont la fonction est de retenir les charges, tel le graphite ou autre particules lubrifiantes, sur l'organe d'essuyage. Il est incorporé sous forme de suspension, de dispersion ou de poudre en fonction du mode d'application du revêtement. Le polymère du liant est choisi parmi les dérivés acryliques, les dérivés styrène acrylique, les acrylonitriles et leurs dérivés, les polyuréthanes de type ester ou éther et leurs dérivés et le polychlorure de vinyle (PVC). Le liant peut également comprendre un élastomère fluoré, des silicones ou siloxanes, des latex élastomériques, les poudres de polyamide, de polyéthylène ou de polypropylène. Le liant peut également comprendre un agent de réticulation du type mélamines, isocyanate ou époxy pour conférer des propriétés de résistance mécanique et chimique accrues au revêtement ainsi que de la cire pour améliorer l'imperméabilité du film formé par les liants.

La ou les charges permettent d'abaisser le coefficient de friction de l'organe d'essuyage. Usuellement, on utilisera du graphite, du disulfure de molybdène ($MoS_2$), du talc, du PTFE, des particules de polyéthyène à poids moléculaire « ultra haut » (Ultra High Molecular Weight Polyethylene - UHMWPE), du polyéthylène, du polypropylène, des silicones, des charges nanostructurées comme les fullerènes, les nanotubes de carbones (CNT) ou leurs mélanges.

L'incorporation de ces charges dans un liant liquide sera facilitée par des agents de dispersion comme par exemple des polyacrylates. Des agents épaississants évitant leur sédimentation sont également souvent requis.

La réticulation est définie comme une densification des liaisons entre les chaînes macromoléculaires constituant le polymère. Par « réticulation accrue », on entend un degré de réticulation supérieur à celui du ou des polymère(s) et/ou élastomère(s) présent(s) dans le reste du matériau et/ou du revêtement.

En général, le degré de réticulation du ou des polymère(s) et/ou élastomère(s) présent(s) dans le reste du matériau et/ou revêtement correspondra au degré de réticulation obtenu dans les conditions usuelles de vulcanisation ou de réticulation chimique du ou des polymère(s) et/ou élastomère(s), c'est-à-dire, sans traitement spécifique additionnel du ou des polymère(s) et/ou élastomère(s). On peut également utiliser le terme « sur-réticulé ».

Pour un polymère donné, le degré de réticulation D peut être mesuré par la solubilité dans un solvant du ou des polymère(s). Le polymère étant soluble dans le solvant, les parties réticulées seront, elles, insolubles.

En considérant uniquement la masse de l'épaisseur superficielle du polymère :

$$D = \text{poids du polymère traité insoluble dans un solvant / poids total du polymère.}$$

Par exemple, le degré de réticulation du NBR peut être mesuré comme suit :

$$D = \text{poids du NBR insoluble dans le métacrésol ou l'acide formique / poids total de NBR.}$$

Selon un exemple avantageux, le degré de réticulation de l'élastomère de l'organe dans l'épaisseur superficielle est supérieur de 10% à celui du ou des polymère(s) présent(s) dans le reste du matériau à base d'élastomère, de préférence, de 50%, plus préférentiellement, de 95%.

La réticulation du matériau et/ou du revêtement peut être mise en évidence également par DSC (Differential Scanning Calorimetry). Une comparaison du matériau/revêtement traité et non traité met en évidence que l'accroissement du degré de réticulation du matériau/revêtement a pour effet de faire disparaître la température de transition vitreuse « $T_g$ » (changement endothermique de capacité calorifique).

On entend par « épaisseur superficielle », une épaisseur localisée en surface du matériau. Avantageusement, l'épaisseur superficielle est égale ou supérieure à 3 $\mu$m et inférieure à 5 $\mu$m.

La réticulation accrue de cette épaisseur superficielle permet une augmentation de la dureté et de la résistance à l'abrasion en particulier du revêtement et/ou du matériau. Un des effets de cette augmentation de dureté est de réduire le bruit que l'organe est susceptible de produire en frottant sur la surface à essuyer. L'organe selon l'invention permet donc d'améliorer le confort sonore de l'occupant du véhicule.

Un autre effet de cette réticulation accrue est d'augmenter la résistance à l'abrasion de l'organe selon l'invention et par conséquent sa durée de vie. De plus, l'épaisseur superficielle présentant une réticulation accrue forme une barrière qui empêche la migration d'espèces chimiques, notamment les espèces utilisées dans les produits lave-glace ou lave-vitre, vers l'intérieur de l'organe. Or, ces espèces chimiques peuvent dégrader le revêtement et/ou le matériau à base d'élastomère(s).

On notera que la surface externe du matériau à base d'élastomère(s) peut être partiellement ou totalement revêtue du revêtement.

Lorsque le matériau est partiellement revêtu par le revêtement, le matériau peut être également partiellement ou totalement traité par bombardement ionique.

L'invention décrit également un organe d'essuyage comportant un matériau à base d'élastomère(s) susceptible d'être obtenu par le procédé comportant les étapes consistant à :

- déposer un revêtement sur au moins une partie d'une surface externe du matériau à base d'élastomère(s),
- traiter par bombardement ionique au moins une partie de la surface de l'ensemble constitué par le matériau à base d'élastomère(s) et le revêtement.

La réticulation accrue est obtenue au moyen d'un bombardement ionique d'énergie suffisante pour générer des recombinaisons dans la matière et accroître les pontages covalents. On obtient une réticulation dont l'intensité de réticulation est supérieure à celle obtenue par d'autres moyens comme la réticulation au moyen d'un agent chimique. Par ailleurs, elle est indépendante de la nature chimique du polymère à irradier. Par exemple, elle sera efficace aussi bien sur un polymère à base de silicone que sur un polymère acrylique ou un polyuréthane.

Grâce à ce traitement par bombardement ionique d'une partie de la surface externe de l'ensemble constitué par le matériau à base d'élastomère(s) et le revêtement, on réalise un organe d'essuyage dont, au moins une partie de sa surface externe, est plus dure sur une épaisseur donnée et moins sujet à l'usure notamment, par frottement. En outre, cette réticulation accrue rend l'ensemble plus résistant aux attaques chimiques pouvant provenir des produits utilisés pour nettoyer les pare-brises.

De plus, l'adhérence du revêtement sur la surface externe non traitée est meilleure que l'adhérence du revêtement sur une surface externe pré-traitée. En effet, si l'on effectuait le traitement par bombardement ionique avant le dépôt du revêtement, le bombardement aurait pour effet de réduire la rugosité de la surface externe du matériau à base d'élastomère (s) et donc de réduire l'adhérence du revêtement sur le matériau.

Le traitement par bombardement ionique s'effectue à l'aide d'un dispositif comportant un générateur d'ions et un applicateur d'ions tels que par exemple ceux décrits dans FR-A-2 899 242 ou US20060042745.

L'applicateur d'ions comprend habituellement des moyens choisis par exemple parmi des lentilles électrostatiques de mise en forme de faisceau d'ions, un diaphragme, un obturateur un collimateur un analyseur de faisceau d'ions et un contrôleur de faisceau d'ions.

Le générateur d'ions comprend habituellement des moyens choisis par exemple parmi une chambre d'ionisation, une source d'ions à filament ou à résonance cyclotronique électronique ou un système à plasma impulsionnel, un accélérateur d'ions et dans certains cas, un séparateur d'ions.

Le bombardement ionique est généralement réalisé sous vide. Par exemple, FR-A-2 899 242 propose de loger l'ensemble des moyens de bombardement ionique (générateur d'ions et applicateur d'ions) ainsi que l'objet à traiter dans une chambre à vide. Des moyens de mise sous vide sont raccordés à cette chambre. Ces moyens de mise sous vide doivent permettre d'obtenir un vide relativement poussé dans la chambre, par exemple de l'ordre de $10^{-2}$ mbar à $10^{-6}$ mbar.

Avantageusement, le bombardement ionique est effectué au moyen de faisceaux d'ions mono ou multi-énergie(s) issus de gaz tels que l'hélium, le néon, le krypton, l'argon, le xénon, le dioxygène ou le diazote, seuls ou en mélange. De préférence, le diazote et/ou l'hélium, seuls ou en mélange, préférentiellement le diazote.

De préférence, le bombardement d'ions s'effectuera à une pression comprise entre 1 mbar et $10^{-5}$mbar, de préférence, entre $10^{-2}$ mbar et $5.10^{-4}$ mbar, et transmettant au matériau une énergie de l'ordre de 0,1 à 100 keV, de préférence de 0,3 à 30 keV.

Selon un autre exemple avantageux, le bombardement ionique est généralement réalisé avec une tension d'extraction comprise entre 35 kV et 100 kV, et on implante, dans le matériau, entre $10^{14}$ et $10^{16}$ ions/cm². Le revêtement comporte une première et une seconde couche, la première couche visant à permettre l'adhérence de la seconde couche et la seconde couche visant à réduire la friction.

La première couche est une couche qui est déposée sur le matériau à base d'élastomère(s) alors que la seconde couche est déposée sur la première couche. Ainsi, la première couche est intercalée entre le matériau à base d'élastomère(s) et la seconde couche.

Ce revêtement en deux couches permet d'optimiser la composition de chacune des couches afin de permettre une meilleure adhérence du revêtement sur le matériau à base d'élastomère(s) tout en diminuant la friction de l'organe sur le pare-brise.

A cet effet, la première et la seconde couche ont chacune une composition générale qui correspond à celle donnée précédemment dans la définition du revêtement.

Toutefois, la première couche est une couche comprenant un liant et une charge, pour laquelle la fraction massique en liant sera relativement importante par rapport à la fraction massique de la charge de façon à garantir une meilleure adhésion de la première couche de revêtement sur le matériau à base d'élastomère(s). Le ratio de la masse sèche de la charge sur la masse sèche du liant peut par exemple être compris entre 0 et 2, préférentiellement, ce ratio est compris entre 1 et 2.

Avantageusement, l'épaisseur de la première couche est faible afin de favoriser la pénétration du traitement ionique. Cette couche a pour but de générer une rugosité de surface qui favorisera l'adhésion de la seconde couche. L'épaisseur de cette première couche peut être comprise entre 1 et 15 $\mu$m. Préférentiellement, l'épaisseur est comprise entre 1 et 5 $\mu$m.

La seconde couche est une couche comprenant un liant et une charge, pour laquelle la fraction massique de charge sera relativement importante par rapport à la fraction massique de liant de façon à maximiser les performances de réduction des frottements. Le ratio de la masse sèche de charge sur la masse sèche du liant peut par exemple être compris entre 3 et 10. Préférentiellement, ce ratio est compris entre 4 et 7. De manière plus préférentielle, le ratio est compris entre 5 et 6.

L'épaisseur de la deuxième couche peut être comprise entre 1 et 15 $\mu$m. Préférentiellement, l'épaisseur est comprise entre 3 et 10 $\mu$m. De manière plus préférentielle, l'épaisseur est comprise entre 3 et 7 $\mu$m.

De préférence, le liant de la seconde couche est le même que celui de la première couche de façon à renforcer l'affinité chimique entre les deux couches. La charge de la deuxième couche peut être identique ou différente de celle de la première couche et ce, en fonction des performances visées. Par exemple on peut utiliser une charge de type graphite dans la première couche et un mélange de type nanotube de carbone (CNT)/graphite dans la seconde couche afin de que l'effet des CNT soit maximisé au vu de la quantité de CNT utilisée.

Ainsi, grâce à l'optimisation de la composition de la deuxième couche, on arrive à réduire d'environ 20% la friction entre l'organe d'essuyage et la surface à essuyer.

Avantageusement, les première et seconde couches du revêtement de l'organe d'essuyage sont co-réticulées.

Par « co-réticulées », on entend la formation de liaisons covalentes entre les chaînes macromoléculaires des polymères des deux couches en contact. En effet, des liaisons covalentes peuvent se former grâce aux ions bombardés, qui peuvent au choix donner l'énergie nécessaire à la formation de la liaison ou s'implanter en liant les chaînes macromoléculaires des liants des deux couches du revêtement. Cette co-réticulation est donc une réticulation accrue entre les couches du revêtement qui résulte du bombardement ionique.

La réticulation accrue définie précédemment étant indépendante de la nature chimique du polymère, des recombinaisons moléculaires vont être générées au sein de chaque couche irradiée mais aussi entre les chaînes polymériques des différentes couches de revêtement superposées. Des liaisons covalentes se forment donc entre les polymères des couches du revêtement.

On obtient donc un revêtement dont les couches sont liées entre elles par des liaisons covalentes entre les chaînes macromoléculaires des polymères des première et seconde couches du revêtement. Ainsi, on s'assure que les couches du revêtement sont bien solidaires et ne risquent pas, sous l'action des forces de friction, de se détacher l'une de l'autre.

Avantageusement, la charge, par exemple du graphite, est piégée dans le liant qui est rendu plus dense et plus cohésif grâce à sa réticulation accrue. On évite ainsi que les particules de graphite soient arrachées au liant sous l'effet des forces de friction. La durée de vie du revêtement est donc augmentée.

En outre, le revêtement peut également être co-réticulé avec le matériau à base d'élastomère(s). Cette co-réticulation résulte également du bombardement ionique.

De même que pour les couches du revêtement, les ions implantés peuvent former des liaisons covalentes entre les chaînes macromoléculaires de la première couche du revêtement et les chaînes macromoléculaires du matériau à base d'élastomère(s).

Ainsi, on garantit une bonne qualité d'accrochage du revêtement sur le matériau à base d'élastomère(s). On obtient donc un organe dont le revêtement a une bonne adhérence sur le matériau à base d'élastomère(s), plus rigide, et dont la durée de vie est plus longue qu'un organe d'essuyage classique.

Des organes d'essuyage plus particulièrement visés par l'invention sont, une lame de balai d'essuie-glace ou une lèvre de lécheur de vitre.

L'invention a pour autre objet un dispositif d'essuyage comportant un organe d'essuyage tel que défini ci-dessus. Il s'agit plus particulièrement d'une lame de balai d'essuie-glace et d'un lécheur de vitre, en particulier pour véhicule automobile.

Par exemple, une lame de balai d'essuyage est usuellement composée de trois éléments :

- une lèvre assurant le contact avec le pare-brise et assurant le joint d'étanchéité permettant l'essuyage de l'eau,
- un talon de forme généralement rectangulaire permettant d'insérer la lame dans le balai et,
- une charnière (optionnelle) formée par une fine bande de caoutchouc située entre la lèvre et le talon et assurant le bon positionnement de la lèvre sur le pare-brise, notamment lors du changement de direction du balai aux points de retournement.

On notera que le balai peut être, soit un balai classique, soit un balai plat.

Par « balai classique », on entend un balai dont la répartition de pression imprimée par le bras supportant le balai est assurée par des palonniers répartis le long du balai.

Alors que pour un « balai plat », la répartition de pression imprimée par le bras supportant le balai est assurée par une vertèbre métallique ayant une courbure et une pression calculée. Ainsi, on peut supprimer les palonniers du bras ce qui permet une réduction de la hauteur du balai.

L'invention concerne aussi un procédé de traitement d'un organe d'essuyage comportant un matériau à base d'élastomère(s) comprenant les étapes consistant à :

a) déposer au moins un revêtement sur au moins une partie d'une surface externe du matériau à base d'élastomère(s),
b) traiter par bombardement ionique un partie de la surface de l'ensemble constitué par le matériau à base d'élastomère(s) et le revêtement.

Grâce à ce procédé, on obtient un organe d'essuyage dont le revêtement présente une réticulation accrue, au moins sur une épaisseur superficielle, voire un revêtement co-réticulé avec le matériau à base d'élastomère(s).

Ce traitement par bombardement ionique peut remplacer avantageusement le traitement d'halogénation habituellement mis en oeuvre.

Dans ce procédé de traitement, le bombardement ionique est tel que défini ci-avant.

Le procédé selon l'invention peut également comporter une étape préalable de préparation d'une jumelle d'organes d'essuyage.

Cette jumelle, c'est-à-dire deux organes d'essuyage attachés ensemble, optionnellement par l'entremise d'un élément central sacrificiel, est avantageusement préparée par moulage (injection ou compression) ou par extrusion du matériau à base d'élastomère(s).

Le procédé peut en outre comporter une étape de pré-refente réalisée entre l'étape a) et l'étape b).

Par « pré-refente », on entend un procédé de coupe visant à créer une entaille continue de part et d'autre et le long du profilé constitué de la jumelle d'essuyage. Ces entailles permettent une séparation ultérieure des organes d'essuyage qui peuvent être gérés de façon plus simple sous forme soudée. Elles permettent également un traitement de surface complet ou partiel de la tranche d'essuyage sans avoir à désolidariser les deux organes du profilé.

En d'autres termes, lorsque l'on a préparé la jumelle d'organes d'essuyage, on dépose un revêtement sur la surface externe du matériau à base d'élastomère(s) et, avant le traitement par bombardement ionique, on pré-refend la jumelle.

On traite ensuite par bombardement ionique, les surfaces des entailles nouvellement créées ce qui permet de générer une réticulation accrue sur une épaisseur superficielle de la surface des entailles ainsi qu'une co-réticulation des différentes couches du revêtement entre elles et avec le matériau à base d'élastomère(s). On garantit ainsi que, sur les parties de l'organe d'essuyage les plus sollicitées mécaniquement, les couches du revêtement et le matériau à base d'élastomère(s) ne se délaminent pas.

Un autre objet de l'invention est l'utilisation des organes tels que définis ci-dessus pour diminuer les nuisances sonores pouvant être produites lors de la friction d'un organe d'essuyage avec une surface à essuyer.

En effet, lorsque l'organe d'essuyage se déplace sur la surface à essuyer, par exemple sur un pare-brise ou contre une vitre, les frictions entre l'organe et la surface à essuyer peuvent générer des ondes sonores, qui nuisent au confort des occupants du véhicule.

Avantageusement, les organes décrits précédemment permettent de réduire ces bruits.

En effet, ces organes se déforment moins sous l'effet des forces de friction car ils sont plus durs en surface, plus résistant à l'usure et la friction entre l'organe et la surface à essuyer est optimisée.

D'autres caractéristiques et avantages de l'invention sont décrits dans les exemples qui suivent, donnée uniquement à titre d'exemple non limitatif et faite en se référant aux dessins dans lesquels :

- les figures 1a et 1b sont des vues schématiques en perspective respectivement d'un balai d'essuie-glace classique et d'un balai d'essuie-glace plat,
- la figure 2 est une vue schématique en perspective d'une lame d'essuyage selon un mode de réalisation de l'invention,
- la figure 3 est un agrandissement du détail III de la figure 1,
- la figure 4 est une vue schématique d'une jumelle de lame d'essuyage
- la figure 5 est un schéma illustrant un procédé de traitement de l'organe d'essuyage selon un mode de réalisation de l'invention.

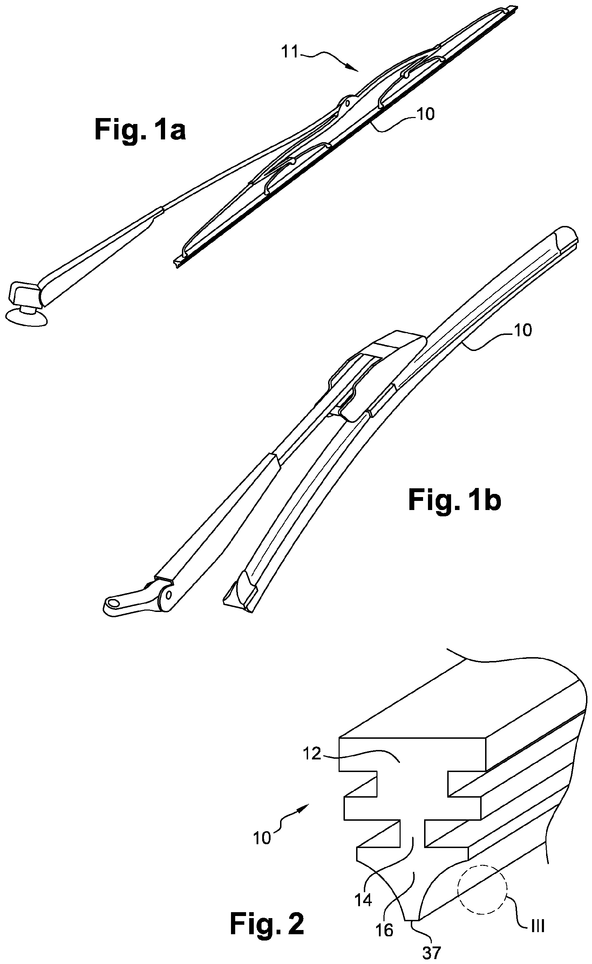

Les figures 1a et 1b représentent une vue schématique en perspective d'un balai d'essuie-glace classique 11 ou plat 11 comprenant une lame d'essuyage 10 selon l'invention.

La figure 2 est une représentation de la lame d'essuyage 10 qui comprend un talon 12 qui permet d'insérer la lame dans un balai essuie-glace 11. Cette lame 10 comprend également une lèvre 16 qui assure le contact avec la surface à essuyer et une charnière 14 formée par une fine bande de caoutchouc située entre la lèvre 16 et le talon 12. Cette charnière 14 assure le bon positionnement de la lèvre 16 sur la surface à essuyer, notamment lors du changement de direction du balai 11 aux points de retournement. La surface à essuyer est dans le cas présent un pare-brise de véhicule automobile.

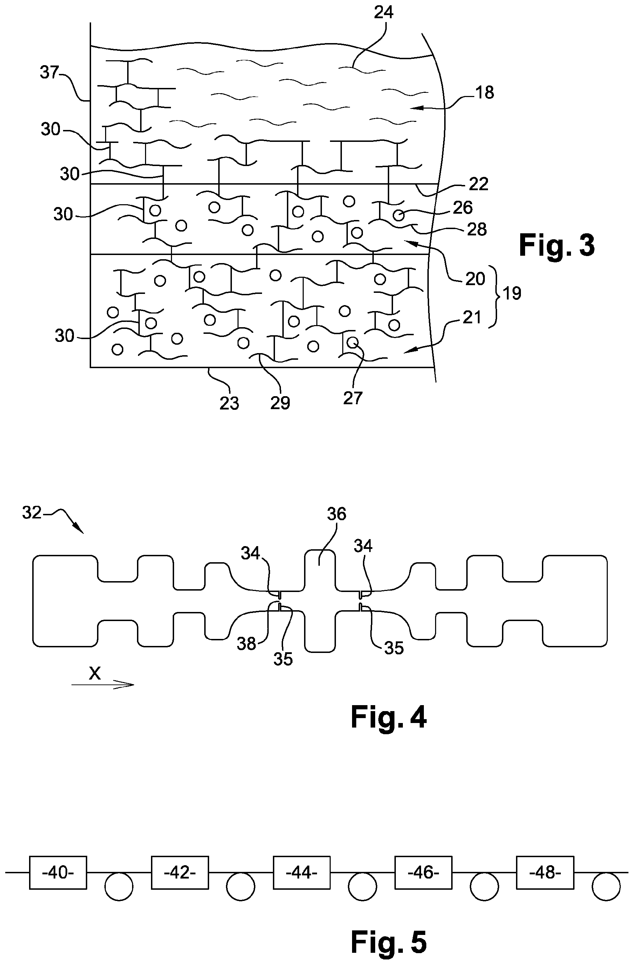

On a représenté à la figure 3 un agrandissement de la lèvre 16 d'une lame d'essuyage 10. Cette lèvre 16 comprend un matériau à base d'élastomère(s) 18 et un revêtement 19 sur sa surface extérieure 22, c'est-à-dire la surface de la lèvre située à l'opposé du talon 12. Le revêtement présente une surface 23 destinée à être en contact avec la surface à essuyer.

On peut voir que le matériau à base d'élastomère(s) 18 comprend des chaînes macromoléculaires représentées par des traits horizontaux 24. De même, le revêtement 19 comprend, dans cet exemple, deux couches 20 et 21 comprenant chacune une charge représentées par des particules 26 et 27 emprisonnées dans liant formé d'une matrice polymère dont les chaînes macromoléculaires sont représentées par des traits horizontaux 28 et 29. Les particules 26 et 27 peuvent être de nature différente. Ainsi, dans cet exemple, les particules 26 sont des particules de graphite alors que les particules 27 sont un mélange de nanotubes de carbone avec du graphite.

On peut également voir une représentation schématique de la réticulation accrue existant entre les chaînes macromoléculaires 24, 28 et 29.

La réticulation accrue est, dans le cas présent, réalisée par bombardement ionique. Les ions bombardés peuvent soit s'implanter en participant à la liaison covalente entre les deux chaînes polymériques ou alors uniquement communiquer son énergie, qui permettra la création de la liaison covalente entre les deux chaînes polymériques. Cette réticulation accrue est donc due à des liens covalents entre des chaînes macromoléculaires 29 créé grâce aux ions bombardés. Ces liens covalents entre les chaînes macromoléculaires sont représentés à la figure 3 par des lignes verticales 30. En fonction des paramètres du bombardement ionique, des liens covalents 30 peuvent également se former entre les chaînes macromoléculaires 28 et entre les chaînes macromoléculaires 24.

Le lecteur comprendra que les chaînes macromoléculaires 24, 28 et 29 ne sont pas obligatoirement des chaînes horizontales, qu'elles peuvent être orientées dans toutes les directions, entrecroisées. Néanmoins, les chaînes 24, 28 et 29 ne sont pas mélangées entre elles en ce sens qu'elles appartiennent chacune à une couche ou matériau indépendant avant bombardement ionique.

Cette réticulation accrue a pour effet de rigidifier l'organe au moins sur son épaisseur superficielle. Elle permet également de créer une barrière à travers laquelle les différentes espèces chimiques ne peuvent pas migrer, que ce soit de l'extérieur vers l'intérieur ou de l'intérieur vers l'extérieur.

Dans les couches 20, 21 du revêtement, cette réticulation accrue permet de créer une matrice polymérique également plus dense qui emprisonne de manière plus efficace les particules 26 et 27. Cela permet de réduire le déchaussement de ces particules 26, 27 et donc l'usure de la lame.

Lorsque les liens covalents 30 se créent grâce aux ions bombardés entre les chaînes macromoléculaires de couche(s) et matériau différents, on parle alors plus spécifiquement de co-réticulation. Il se crée des liaisons covalentes entre des chaînes macromoléculaires 29 de la seconde couche 21 du revêtement 19 et des chaînes macromoléculaires 28 de la première couche 20 du revêtement 19 ainsi qu'entre des chaînes macromoléculaires 24 du matériau à base d'élastomère(s) 18 et des chaînes macromoléculaires 28 de la première couche 20 du revêtement 19 par l'entremise des ions bombardés. Ces liaisons permettent une meilleure accroche du revêtement 19 sur le matériau à base d'élastomère(s) 18 et des couches 20 et 21 entre elles.

On va maintenant décrire un procédé de traitement d'une jumelle 32 de lame d'essuyage selon un mode de réalisation de l'invention en se référant aux figures 4 et 5.

Pour passer d'une étape à la suivante de ce procédé, l'organe d'essuyage est, dans cet exemple, porté par une bande convoyeuse pouvant comporter des rouleaux.

On a représenté à la figure 4 une vue en coupe d'une jumelle 32 de lames d'essuyage. On définit un axe transversal de symétrie centrale de la jumelle, parallèle à l'axe X. De part et d'autre de cet axe, on définit deux faces de la jumelle 32.

Cette jumelle 32 peut, par exemple, être obtenue par une étape d'extrusion 40 de matériau à base d'élastomère(s). Les deux lames sont extrudées ensemble et sont attachées l'une à l'autre par la surface externe 22 de la lèvre 16 par l'entremise d'un l'élément de liaison sacrificiel 36. Après vulcanisation, on obtient donc une jumelle 32 de lames d'essuyage 10 en matériau à base d'élastomère(s) mais dans laquelle le matériau à base d'élastomère(s) est brut, c'est-à-dire qu'il n'a subi aucun traitement de post-vulcanisation.

Chaque face de la jumelle 32 subit une étape 42 de dépôt de revêtement pendant laquelle on vient déposer sur une partie des lèvres 16 des lames d'essuyage 10, au moins une couche de revêtement 19 permettant de réduire la friction de la lame d'essuyage 10 avec le pare-brise. Ce revêtement 19 est déposé notamment à l'endroit où la lèvre 10 va être pré-refendue.

La jumelle 32 passe ensuite à l'étape de pré-refente 44, c'est-à-dire qu'à l'aide d'un outil coupant, on va réaliser sur chaque face de la jumelle, une entaille 34, 35 de la jumelle au droit de la liaison entre la lèvre 16 de chaque lame d'essuyage 10 et l'élément de liaison sacrificiel 36 tout en laissant une partie de cette liaison non découpée. Ainsi, chaque lame 10 est rattachée à l'élément de liaison sacrificiel 36 par un « pont » de matière 38 pouvant être coupé facilement mais suffisamment résistant pour permettre une manipulation de la jumelle 32 sans que les deux lames d'essuyage 10 ne se séparent.

Ces entailles permettent d'avoir accès à une partie importante de la surface d'essuyage frontale 37 du matériau à base d'élastomère(s) 18. Leur précision peut être ajustée de manière fine à 0,10 mm voire inférieure à 0,05 mm près.

Plus particulièrement, la jumelle 32 est entaillée de façon continue en mettant la jumelle sous tension et ce, afin de faciliter l'opération de pré-refente. L'outil de coupe est guidé par des éléments qui assurent une tension stable ainsi qu'un guidage fiable de l'outil.

On obtient ainsi, une jumelle 32 conforme à la figure 4 sur laquelle les entailles 34, 35 sont en position fermée après découpe et représentées par des lignes droites et sur laquelle on peut voir le pont de matière 38 reliant chaque lame 10 à l'élément sacrificiel 36 permettant de manipuler la jumelle 32 comme un seul élément.

Afin de traiter les bords de l'entaille 34 et donc une partie de la surface frontale d'essuyage 37, la jumelle 32 est positionnée de sorte à placer les entailles 34 faites d'un côté de la jumelle 32 en position d'ouverture. Le bombardement ionique est réalisé à l'étape 46. En position d'ouverture de l'entaille 34, les parois de l'entaille 37 forment un angle compris entre 20° et 60°, préférentiellement, cet angle est de 45°.

Cette ouverture des entailles 34 est réalisée grâce à la forme particulière du support sur lequel avance la jumelle 32.

L'angle formé par les parois des entailles et l'angle du faisceau d'ions permettent de traiter par bombardement ionique une partie de la face frontale d'essuyage 37 ainsi qu'une partie de la surface de l'ensemble formé par le matériau à base d'élastomère(s) 18 et du revêtement 19 comme on peut le voir à la figure 3. On génère donc une réticulation accrue sur une épaisseur superficielle entre les chaînes macromoléculaires des différentes couches du revêtement et du matériau à base d'élastomère(s) mais également sur une épaisseur superficielle de la surface frontale d'essuyage 37. Cette réticulation accrue permet de garantir une bonne cohésion des couches 20, 21 du revêtement entre elles et avec le matériau à base d'élastomère(s) 18

Lorsque la première face est traitée par bombardement ionique, la jumelle est retournée et la seconde face est positionnée pour que les entailles 35 de la seconde face de la jumelle 32 soient en position d'ouverture, position dans laquelle elles peuvent être traitées par bombardement ionique. On traite donc la jumelle 32 sur les deux faces afin que les 4 entailles 34, 35 soient traitées.

De préférence, le bombardement ionique est réalisé en plaçant les sources d'ions à la verticale des entailles 34 avec un angle compris entre 0° et 45°, de préférence avec un angle de 20°.

En outre, le bombardement ionique peut être réalisé par des micro-sources qui peuvent être basées, par exemple, sur une technologie filamentaire ou sur une technologie type ECR (Electron Cylonic Resonance) avec des ions multi-énergie d'azote. De par leur très faible taille, ces micro-sources permettent de concevoir un dispositif dont l'encombrement est peu important.

Le bombardement ionique est généralement réalisé par une succession de sources d'ions placées en série afin d'obtenir l'intensité de traitement désirée en fonction de la vitesse de déplacement de la jumelle 32. En fonction notamment des conditions de réglage des sources, du nombre de sources et de la vitesse de déplacement de la jumelle 32, on peut implanter, dans le matériau, entre $10^{14}$ et $10^{16}$ ions/cm$^2$. La tension d'extraction est comprise entre 35 kV et 100 kV.

Enfin, dans une étape de refente 48, on sépare chaque lame 10 de l'élément de liaison sacrificiel 36 en coupant le pont de matière 38. On obtient ainsi deux lames 10 comportant un matériau à base d'élastomère(s) 18 dont une surface externe est revêtue au moins en partie par un revêtement 20, le matériau portant le revêtement présentant une réticulation accrue sur une épaisseur superficielle.

**Revendications**

1. Organe d'essuyage (10) comportant un matériau à base d'élastomère(s) (18) comprenant sur au moins une partie d'une surface externe (22) du matériau un revêtement (19), au moins une partie de la surface de l'ensemble constitué par le matériau à base d'élastomère(s) (18) et le revêtement (19) présentant sur au moins une épaisseur localisée en surface du matériau , ladite au moins une épaisseur étant égale ou supérieure à 3 $\mu$m et inférieure à 5 $\mu$m un degré de réticulation de l'élastomère de l'organe supérieur de 10% à celui du ou des polymère(s) présent(s) dans le reste du matériau à base d'élastomère, ledit revêtement comprenant une première et une deuxième couche sur au moins une partie d'une surface externe (22) du matériau à base d'élastomère(s) (18), la première couche comprenant un liant et une première charge, pour laquelle le ratio de la masse sèche de la première charge sur la masse sèche du liant est compris entre 1 et 2 et la deuxième couche comprenant le liant et une deuxième charge, pour laquelle le ratio de la masse sèche de la deuxième charge sur la masse sèche du liant est compris entre 3 et 10.

**2.** Organe d'essuyage (10) comportant un matériau à base d'élastomère(s) (18), susceptible d'être obtenu par un procédé comportant les étapes consistant à :

- déposer un revêtement (19) comportant une première et une deuxième couche sur au moins une partie d'une surface externe (22) du matériau à base d'élastomère(s) (18), la première couche comprenant un liant et une première charge, pour laquelle le ratio de la masse sèche de la première charge sur la masse sèche du liant est compris entre 1 et 2 et la deuxième couche comprenant le liant et une deuxième charge, pour laquelle le ratio de la masse sèche de la deuxième charge sur la masse sèche du liant est compris entre 3 et 10,
- traiter par bombardement ionique à l'aide d'un dispositif comportant un générateur d'ions et un applicateur d'ions au moins une partie de l'ensemble constitué par le matériau à base d'élastomère(s) (18) et le revêtement (19).

**3.** Organe d'essuyage (10) selon la revendication 1 ou 2, dans lequel les première (20) et seconde couches (21) sont co-réticulées.

**4.** Organe d'essuyage (10) selon l'une quelconque des revendications 1 à 3, dans lequel le revêtement (19) est co-réticulé avec le matériau à base d'élastomère(s) (18).

**5.** Organe d'essuyage (10) selon l'une quelconque des revendications 2 à 4, dans lequel le bombardement ionique est réalisé avec une tension d'extraction comprise entre 35 et 100 kV et on implante entre $10^{14}$ et $10^{16}$ ions/cm$^2$ dans le matériau.

**6.** Balai d'essuie-glace (11) comportant un organe d'essuyage (10) selon l'une quelconque des revendications 1 à 5.

**7.** Procédé de traitement d'un organe d'essuyage (10) comportant un matériau à base d'élastomère(s) (18) comprenant les étapes consistant à :

a) déposer au moins un revêtement (19) comportant une première et une deuxième couche sur au moins une partie d'une surface externe (22) du matériau à base d'élastomère(s) (18), la première couche comprenant un liant et une première charge, pour laquelle le ratio de la masse sèche de la première charge sur la masse sèche du liant est compris entre 1 et 2 et la deuxième couche comprenant le liant et une deuxième charge, pour laquelle le ratio de la masse sèche de la deuxième charge sur la masse sèche du liant est compris entre 3 et 10, sur au moins une partie d'une surface externe (22) du matériau à base d'élastomère(s) (18),
b) traiter par bombardement ionique à l'aide d'un dispositif comportant un générateur d'ions et un applicateur d'ions au moins une partie de la surface de l'ensemble constitué par le matériau à base d'élastomère(s) (18) et le revêtement (19).

**8.** Procédé selon la revendication 7, dans lequel le bombardement ionique est réalisé avec des ions mono- ou multi-énergie(s) issus de gaz, ces gaz étant l'hélium, le néon, le krypton, l'argon, le xénon, le dioxygène ou le diazote, seuls ou en mélange.

**9.** Procédé selon la revendication 7 ou 8, comportant une étape préalable de préparation d'une jumelle (32) d'organes d'essuyage.

**10.** Procédé selon la revendication 9, comportant en outre une étape de pré-refente ou de refente réalisée entre l'étape a) et l'étape b).

**11.** Procédé selon l'une quelconque des revendications 7 à 10, dans lequel le bombardement ionique est réalisé avec une tension d'extraction comprise entre 35 et 100 kV et on implante entre $10^{14}$ et $10^{16}$ ions/cm$^2$ dans le matériau.

**12.** Utilisation d'un procédé selon l'une quelconque des revendications 7 à 11 pour augmenter la dureté et la résistance à l'abrasion du revêtement et/ou du matériau d'un organe d'essuyage tel que défini dans l'une quelconque des revendications 1 à 6, cette augmentation ayant pour effet de réduire le bruit que l'organe est susceptible de produire en frottant sur la surface à essuyer, l'organe permettant donc d'améliorer le confort sonore de l'occupant du véhicule.

**Patentansprüche**

1. Wischelement (10), umfassend ein Material auf der Basis von Elastomer(en) (18), das auf mindestens einem Teil einer Außenfläche (22) des Materials eine Beschichtung (19) aufweist, wobei mindestens ein Teil der Oberfläche der Anordnung, die aus dem Material auf der Basis von Elastomer (en) (18) und der Beschichtung (19) gebildet ist, auf mindestens einer Dicke, die auf der Oberfläche des Materials lokalisiert ist, wobei die mindestens eine Dicke gleich oder größer als 3 μm und kleiner als 5 μm ist, einen Vernetzungsgrad des Elastomers des Elements aufweist, der um 10 % größer ist als jener des Polymers oder der Polymere, das/die auf dem Rest des Materials auf der Basis von Elastomer vorhanden ist/sind, wobei die Beschichtung eine erste und eine zweite Schicht auf mindestens einem Teil einer Außenfläche (22) des Materials auf der Basis von Elastomer(en) (18) aufweist, wobei die erste Schicht ein Bindemittel und einen ersten Füllstoff aufweist, für die das Verhältnis der Trockenmasse des ersten Füllstoffs zu der Trockenmasse des Bindemittels zwischen 1 und 2 beträgt, und wobei die zweite Schicht das Bindemittel und einen zweiten Füllstoff aufweist, für die das Verhältnis der Trockenmasse des zweiten Füllstoffs zu der Trockenmasse des Bindemittels zwischen 3 und 10 beträgt.

2. Wischelement (10), umfassend ein Material auf der Basis von Elastomer (en) (18), das geeignet ist, durch ein Verfahren erhalten zu werden, das die Schritte aufweist, die darin bestehen:

   - eine Beschichtung (19) umfassend eine erste und eine zweite Schicht auf mindestens einem Teil einer Außenfläche (22) des Materials auf der Basis von Elastomer(en) (18) aufzutragen, wobei die erste Schicht ein Bindemittel und einen ersten Füllstoff aufweist, für die das Verhältnis der Trockenmasse des ersten Füllstoffs zu der Trockenmasse des Bindemittels zwischen 1 und 2 beträgt, und wobei die zweite Schicht das Bindemittel und einen zweiten Füllstoff aufweist, für die das Verhältnis der Trockenmasse des zweiten Füllstoffs zu der Trockenmasse des Bindemittels zwischen 3 und 10 beträgt,
   - durch Ionenbeschuss mittels einer Vorrichtung, die einen Ionengenerator und einen Ionenapplikator aufweist, mindestens einen Teil der Anordnung, die aus dem Material auf der Basis von Elastomer(en) (18) und der Beschichtung (19) gebildet ist, zu behandeln.

3. Wischelement (10) nach Anspruch 1 oder 2, wobei die erste (20) und zweite Schicht (21) kovernetzt sind.

4. Wischelement (10) nach einem der Ansprüche 1 bis 3, wobei die Beschichtung (19) mit dem Material auf der Basis von Elastomer(en) (18) kovernetzt ist.

5. Wischelement (10) nach einem der Ansprüche 2 bis 4, wobei der Ionenbeschuss mit einer Extraktionsspannung zwischen 35 und 100 kV durchgeführt wird und zwischen $10^{14}$ und $10^{16}$ Ionen/cm$^2$ in das Material implantiert werden.

6. Scheibenwischerblatt (11), umfassend ein Wischelement (10) nach einem der Ansprüche 1 bis 5.

7. Verfahren zur Behandlung eines Wischelements (10), umfassend ein Material auf der Basis von Elastomer(en) (18), das die Schritte aufweist, die darin bestehen:

   a) mindestens eine Beschichtung (19) umfassend eine erste und eine zweite Schicht auf mindestens einem Teil einer Außenfläche (22) des Materials auf der Basis von Elastomer(en) (18) aufzutragen, wobei die erste Schicht ein Bindemittel und einen ersten Füllstoff aufweist, für die das Verhältnis der Trockenmasse des ersten Füllstoffs zu der Trockenmasse des Bindemittels zwischen 1 und 2 beträgt, und wobei die zweite Schicht das Bindemittel und einen zweiten Füllstoff aufweist, für die das Verhältnis der Trockenmasse des zweiten Füllstoffs zu der Trockenmasse des Bindemittels zwischen 3 und 10 auf mindestens einem Teil einer Außenfläche (22) des Materials auf der Basis von Elastomer(en) (18) beträgt,
   b) durch Ionenbeschuss mittels einer Vorrichtung, die einen Ionengenerator und einen Ionenapplikator aufweist, mindestens einen Teil der Oberfläche der Anordnung, die aus dem Material auf der Basis von Elastomer(en) (18) und der Beschichtung (19) gebildet ist, zu behandeln.

8. Verfahren nach Anspruch 7, wobei der Ionenbeschuss mit Mono- oder Multi-Energie-Ionen, die aus Gasen stammen, durchgeführt wird, wobei diese Gase Helium, Neon, Krypton, Argon, Xenon, Disauerstoff oder Distickstoff, einzeln oder in Mischung sind.

9. Verfahren nach Anspruch 7 oder 8, umfassend einen vorhergehenden Schritt des Herstellens von einer Zwillingsversion (32) von Wischelementen.

10. Verfahren nach Anspruch 9, ferner umfassend einen Schritt des Vorschneidens oder des Schneidens, der zwischen dem Schritt a) und dem Schritt b) durchgeführt wird.

11. Verfahren nach einem der Ansprüche 7 bis 10, wobei der Ionenbeschuss mit einer Extraktionsspannung zwischen 35 und 100 kV durchgeführt wird und zwischen $10^{14}$ und $10^{16}$ Ionen/cm$^2$ in das Material implantiert werden.

12. Verwendung eines Verfahrens nach einem der Ansprüche 7 bis 11, um die Härte und die Abriebfestigkeit der Beschichtung und/oder des Materials eines Wischelements, wie in einem der Ansprüche 1 bis 6 definiert, zu erhöhen, wobei diese Erhöhung die Wirkung aufweist, das Geräusch, das das Element beim Reiben auf der zu wischenden Oberfläche erzeugen kann, verringert, wobei das Element somit ermöglicht, den akustischen Komfort des Fahrzeuginsassen zu verbessern.


**Claims**

1. Wiping member (10) comprising a material based on elastomer(s) (18) comprising a coating (19) on at least one portion of an outer surface (22) of the material, at least one portion of the surface of the assembly constituted by the material based on elastomer(s) (18) and the coating (19) having over at least a thickness located at the surface of the material, said at least one thickness being equal to or greater than 3 $\mu$m and less than 5 $\mu$m, a degree of crosslinking of the elastomer of the member that is 10% greater than that of the polymer(s) present in the remainder of the elastomer-based material, said coating comprising a first layer and a second layer on at least one portion of an outer surface (22) of the material based on elastomer(s) (18), the first layer comprising a binder and a first filler, for which the ratio of the dry weight of the first filler to the dry weight of the binder is between 1 and 2 and the second layer comprising the binder and a second filler, for which the ratio of the dry weight of the second filler to the dry weight of the binder is between 3 and 10.

2. Wiping member (10) comprising a material based on elastomer(s) (18), capable of being obtained by a process comprising the steps consisting in:

   - depositing a coating (19) comprising a first layer and a second layer on at least one portion of an outer surface (22) of the material based on elastomer(s) (18), the first layer comprising a binder and a first filler, for which the ratio of the dry weight of the first filler to the dry weight of the binder is between 1 and 2 and the second layer comprising the binder and a second filler, for which the ratio of the dry weight of the second filler to the dry weight of the binder is between 3 and 10,
   - treating, by ion bombardment using a device comprising an ion generator and an ion applicator, at least one portion of the assembly constituted by the material based on elastomer(s) (18) and the coating (19).

3. Wiping member (10) according to Claim 1 or 2, wherein the first layer (20) and second layer (21) are co-crosslinked.

4. Wiping member (10) according to any one of Claims 1 to 3, wherein the coating (19) is co-crosslinked with the material based on elastomer(s) (18).

5. Wiping member (10) according to any one of Claims 2 to 4, wherein the ion bombardment is carried out with an extraction voltage of between 35 kV and 100 kV, and between $10^{14}$ and $10^{16}$ ions/cm$^2$ are implanted in the material.

6. Windshield wiper (11) comprising a wiping member (10) according to any one of Claims 1 to 5.

7. Process for treating a wiping member (10) comprising a material based on elastomer(s) (18) comprising the steps consisting in:

   a) depositing at least one coating (19) comprising a first layer and a second layer on at least one portion of an outer surface (22) of the material based on elastomer(s) (18), the first layer comprising a binder and a first filler, for which the ratio of the dry weight of the first filler to the dry weight of the binder is between 1 and 2 and the second layer comprising the binder and a second filler, for which the ratio of the dry weight of the second filler to the dry weight of the binder is between 3 and 10, on at least one portion of an outer surface (22) of the material based on elastomer(s) (18),

b) treating, by ion bombardment using a device comprising an ion generator and an ion applicator, at least one portion of the surface of the assembly constituted by the material based on elastomer(s) (18) and the coating (19).

8. Process according to Claim 7, wherein the ion bombardment is carried out with mono-energetic or multi-energetic ions resulting from gases, these gases being helium, neon, krypton, argon, xenon, dioxygen or dinitrogen, alone or in a mixture.

9. Process according to Claim 7 or 8, comprising a prior step of preparing a pair (32) of wiping members.

10. Process according to Claim 9, additionally comprising a pre-splitting or splitting step carried out between step a) and step b).

11. Process according to any one of Claims 7 to 10, wherein the ion bombardment is carried out with an extraction voltage of between 35 kV and 100 kV, and between $10^{14}$ and $10^{16}$ ions/cm$^2$ are implanted in the material.

12. Use of a process according to any one of Claims 7 to 11, for increasing the hardness and the abrasion resistance of the coating and/or the material of a wiping member as defined in any one of Claims 1 to 6, this increase having the effect of reducing the noise that the member is capable of producing by rubbing on the surface to be wiped, the member therefore making it possible to improve the sound comfort of the vehicle occupant.

11

**Fig. 1a**

10

10

**Fig. 1b**

12

10

14

16

III

**Fig. 2**

37

**Fig. 3**

**Fig. 4**

**Fig. 5**

**EP 2 652 018 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5883168 A
- FR 2899242 A
- US 20060042745 A